# EUROPÄISCHE PATENTSCHRIFT

(11) **EP 1 095 241 B1**
(45) Veröffentlichungstag und Bekanntmachung des Hinweises auf die Patenterteilung: **11.12.2002**
(21) Anmeldenummer: 99945863.1
(22) Anmeldetag: 01.07.1999
(51) Int. Cl.: G01C 19/00

(54) **ANORDNUNG UND VERFAHREN ZUR ERMITTLUNG EINER RÄUMLICHEN POSITION EINES OBJEKTS**
DEVICE AND METHOD FOR DETERMINING A SPATIAL POSITION OF AN OBJECT
DISPOSITIF ET PROCEDE POUR LA DETERMINATION DE LA POSITION SPATIALE D'UN OBJET

(30) Priorität: 09.07.1998 DE 19830833
(43) Veröffentlichungstag der Anmeldung: 02.05.2001
(73) Patentinhaber: SIEMENS AKTIENGESELLSCHAFT, 80333 München (DE)
(72) Erfinder: MAGNUSSEN, Björn, D-81739 München (DE)
(86) Internationale Anmeldenummer: DE9902007
(87) Internationale Veröffentlichungsnummer: WO00003200

(56) Entgegenhaltungen:
- DE-A- 4 023 952
- US-A- 5 369 347
- R.A. RUSSEL: "Heat trails as short-lived navigational markers for mobile robots" PROCEEDINGS OF THE 1997 IEEE INTERNATIONAL CONFERENCE ON ROBOTICS AND AUTOMATION, April 1997 (1997-04), Seiten 3534-3539, XP000776369 albuquerque US
- PATENT ABSTRACTS OF JAPAN vol. 17, no. 277 (P-1546), 27. Mai 1993 (1993-05-27) & JP 05 011839 A (SANYO ELECTRIC), 22. Januar 1993 (1993-01-22)
- PATENT ABSTRACTS OF JAPAN vol. 17, no. 369 (P-1572), 12. Juli 1993 (1993-07-12) & JP 05 060630 A (MASUSHITA ELECTRIC IND ), 12. März 1993 (1993-03-12)

## Beschreibung

Die Erfindung bezieht sich auf die Ermittlung einer räumlichen Position eines Objekts.

Der Einsatz eines autonomen Robotersystems in der Industrie nimmt immer mehr zu. Ausgangspunkt der Entwicklung war der Einsatz eines Robotersystems in der Fertigung. Dabei wurde dieses Robotersystem stationär eingesetzt, um sich wiederholende, aber sich nicht ändernde und fest vorgegebene Bewegungsabläufe durchzuführen. Die Anforderung an die Präzision steht dabei im Vordergrund. Der Nachteil dieses Robotersystems ist dessen Ortsgebundenheit und damit dessen geringe Flexibilität.

Aus [2] ist ein mobiles Robotersystem bekannt, das nicht mehr stationär ist, sondern sich selbständig fortbewegen kann. Dabei wird die Navigation der Fortbewegung durch spezielle Präparierungen in der Umgebung des Roboters bewerkstelligt.

Ein Beispiel für dieses Robotersystem ist das führerlose Transportsystem, das zum Materialtransport eingesetzt wird. Dieses System ist meist spurgeführt, das heißt, es folgt einer fest vorgegebenen Bahn. Dieses Konzept hat sich in der Praxis bewährt, hat aber den Nachteil, daß es äußerst unflexibel ist [5]. Dies ist darauf zurückzuführen, daß die Navigationssteuerung des Robotersystems durch eine permanent vorhandene Leitspur erfolgt [2]. Diese wird vor Aufnahme des Betriebs des Transportroboters in Form eines elektrischen Leiters längs der Fahrtstrecke fest in den Boden eingebracht. Bei einer Änderung der Streckenführung ist eine aufwendige Neuverlegung des Leiters erforderlich. Der alte Leiter muß aus dem Boden entfernt, der Bodenbelag muß repariert, die neue Streckenführung muß festgelegt und der Leiter muß längs der neuen Strecke in den Boden eingelegt werden. Dies bedeutet einen großen Zeitaufwand und hohe Kosten.

Aus [3] ist ein autonomes mobiles Robotersystem bekannt, das in der Lage ist, sich völlig selbständig zu orientieren, zu navigieren und autonom eine vorgegebene Aufgabe in einer sich dynamisch ändernden Umgebung auszuführen, ohne daß ein großer Aufwand zur Präparierung der Umgebung notwendig ist.

Dazu wurden verschiedene Arten eines Positionsbestimmungsund Navigationssystems entwickelt [3]. Ein solches System arbeitet meist auf der Basis eines bildgebenden Sensors. Dabei wird am Roboter ein Sensor angebracht, der die Umgebung des Roboters detektiert. Unter Verwendung eines gängigen programmierbaren Rechners werden die Sensordaten ausgewertet und eine Karte der Umgebung, ähnlich einer Landkarte, aufgebaut.

Diese Karte wird rechnergestützt ausgewertet. Unter Berücksichtigung der kinematischen und geometrischen Eigenschaften sowie der aktuellen Position des Roboters wird für eine vorgegebene Aufgabe die bestmögliche Navigation bestimmt [4].

Aus [3] ist bekannt, als Sensor bei einem mobilen Roboter einen Ultraschallsensor, einen Lasersensor oder ein Stereokamerasystem einzusetzen.

Jedoch weist das aus [3] bekannte Sensorsystem verschiedene Nachteile auf. So ist der Lasersensor oder das Stereokamerasystem für den Meßeinsatz zu teuer. Im Gegensatz dazu weist der Ultraschallsensor zwar einen niedrigen Preis und eine große Robustheit auf. Doch die Genauigkeit eines derartigen Sensors, dessen Störanfälligkeit gegenüber einer Temperaturschwankung, eines Fremdsignals oder einer Mehrfachreflexion, die geringe Winkelauflösung und die geringe Reichweite des Sensors machen dessen Einsatz nur bedingt möglich.

Aus [6] ist ein sensorbasiertes System zur Erkennung einer thermischen Markierung bekannt. Bei diesem System wird die thermische Markierung mit einem Bildsensor abgetastet. Die enthaltenen Bildsignale werden ausgewertet. Dadurch wird die thermische Markierung erkannt.

Ferner ist aus [1] bekannt, ein pyroelektrisches Material für die Entwicklung eines thermischen Sensors zu verwenden.

Somit liegt der Erfindung das Problem zugrunde, auf flexible und kostengünstige Art und Weise die räumliche Position eines Objekts zu ermitteln.

Das Problem wird durch die Anordnung gemäß Patentanspruch 1 sowie durch das Verfahren gemäß Patentanspruch 9 gelöst.

Die Anordnung zur Ermittlung einer räumlichen Position eines ersten Objekts weist einen bildgebenden thermischen Sensor und eine mit dem Sensor verkoppelte Verarbeitungseinheit auf. Die Verarbeitungseinheit ist derart eingerichtet, daß aus entsprechenden Signalen des Sensors anhand mindestens einer thermischen Markierung, die von dem thermischen Sensor erfaßt wird, die räumliche Position des ersten Objekts bestimmbar ist.

Als thermische Markierung wird ein Objekt verwendet, dessen Temperatur von einer Umgebungstemperatur verschieden ist. Die Umgebungstemperatur ist die Temperatur in der Umgebung des ersten Objekts.

Bei dem Verfahren zur Ermittlung einer räumlichen Position eines ersten Objekts mittels eines bildgebenden thermischen Sensors und einer mit dem Sensor gekoppelten Verarbeitungseinheit werden folgende Schritte durchgeführt:
a) der Sensor detektiert ein thermisches Bild der Umgebung und gibt entsprechende Signale an die Verarbeitungseinheit ab,
b) die Verarbeitungseinheit nimmt die Signale auf, wertet das Bild hinsichtlich mindestens einer thermischen Markierung aus und bestimmt abhängig von der Markierung die räumliche Position des ersten Objekts.

Durch die Erfindung wird ein sehr einfaches und kostengünstiges System zur Positionsermittlung geschaffen, da sowohl für die Produktion des bildgebenden thermischen Sensors als auch für das Erzeugen einer thermischen Markierung geringe Kosten anfallen.

Insbesondere die Möglichkeit, eine schon vorhandene Wärmequelle wie einen Beleuchtungskörper oder eine auf natürliche Weise entstandene Thermospur wie eine feuchte Reinigungsspur als thermische Markierung nutzen zu können, machen die Erfindung attraktiv und praktikabel.

Neben diesen Vorteilen hat die Verwendung einer thermischen Markierung den Vorteil, daß sie für den Menschen in der Regel nicht sichtbar und somit nicht störend ist.

Bevorzugte Weiterbildungen der Erfindung ergeben sich aus den abhängigen Ansprüchen.

Vorzugsweise ist der bildgebende thermische Sensor ein Sensor mit einem pyroelektrischen Dünnfilm. Damit kann der Sensor als sehr kleines und kostengünstiges Bauteil ausgeführt werden.

In einer weiteren Ausgestaltung ist vorgesehen, daß die Anordnung ein Mittel umfaßt, das derart auf ein zweites Objekt wirkt, daß die Temperatur des zweiten Objekts von einer Umgebungstemperatur verschieden und das zweite Objekt als thermische Markierung erkennbar ist. Der Vorteil dieser Ausführung liegt darin, daß sich durch das Zusammenwirken von erstem und zweitem Objekt ein sehr flexibel einsetzbares System ergibt.

Vorzugsweise ist das Mittel so eingerichtet, daß das zweite Objekt mit Flüssigkeit benetzt wird, wodurch die Temperatur des zweiten Objekts von der Umgebungstemperatur verschieden und das zweite Objekt als thermische Markierung erkennbar wird. Der Vorteil dieser Ausführung liegt in der äußerst einfachen und kostengünstigen Art und Weise, durch die die thermische Markierung erzeugt wird.

Eine weitere vorteilhafte Ausgestaltung hinsichtlich der Einfachheit und Kompaktheit der Anordnung ergibt sich, wenn das Mittel, das auf das zweite Objekt wirkt, das erste Objekt ist.

Ein besonders einfacher Aufbau der Anordnung ergibt sich, wenn der bildgebende thermische Sensor am ersten Objekt angebracht ist.

Vorzugsweise wird die Anordnung so eingesetzt, daß das erste Objekt ein Roboter ist. Auf diese Weise liegt ein sehr einfaches, flexibles und preiswertes System zur Positionsermittlung für den Roboter vor.

Ausführungsbeispiele der Erfindung sind in den Figuren 1 bis 4 dargestellt und werden im weiteren näher erläutert.

Es zeigen:
- Figur 1: Orientierung eines Roboters an einer durch den Roboter selbst erzeugten Thermospur
- Figur 2: Orientierung eines Reinigungsroboters
- Figur 3: Absicherung von einem Gefährdungsbereich durch eine thermische Markierung
- Figur 4: Erkennung eines menschlichen Hindernisses

### 1. Orientierung eines Roboters an einer durch den Roboter selbst erzeugten Thermospur

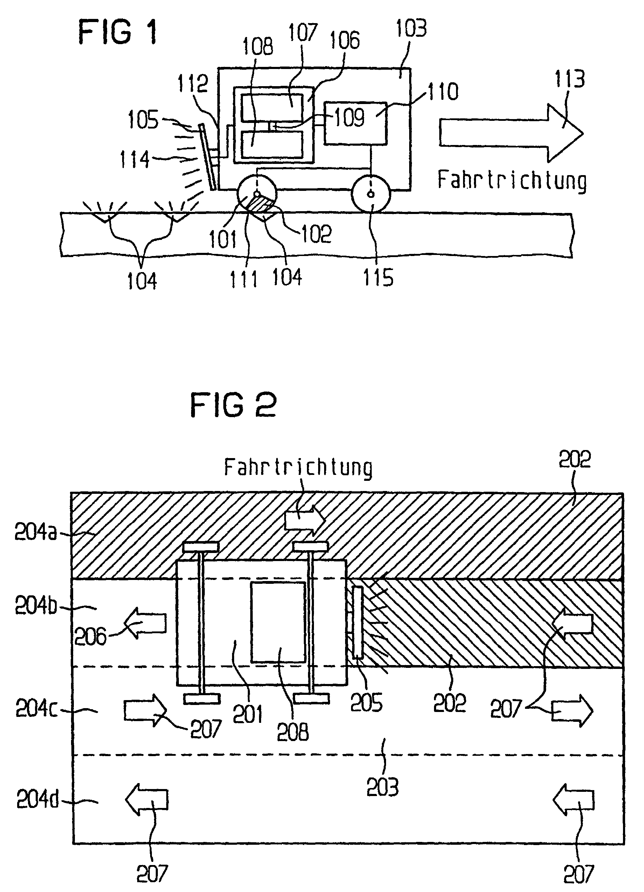

Figur 1 zeigt die Orientierung eines Roboters 103 an einer durch den Roboter 103 selbst erzeugten Thermospur 104.

Durch das Heizen eines Sektors 111 eines Hinterrads 101 des Roboters 103 durch ein im Hinterrad 101 eingearbeitetes Heizelement 102 erwärmt der Roboter 103 während seiner Fahrt in vorgegebenen Abständen Elemente am Boden 104. Diese erwärmten Bodenelemente 104 wirken bis zu ihrer vollständigen Abkühlung auf die Umgebungstemperatur als thermische Markierungen und bilden die Thermospur 104.

Ein an der Rückseite 112 des Roboters 103 angebrachter bildgebender thermischer Sensor 105 detektiert in vorgegebenen Zeitabständen ein entgegen der Fahrtrichtung 113 des Roboters 103 gerichtetes Umgebungsbild 114. Der Sensor 105 ist so ausgestaltet, wie in [1] beschrieben.

Der Sensor 105 liefert bei geradliniger Fahrt des Roboters 103 ein entgegen der Fahrtrichtung 113 gerichtetes thermisches Umgebungsbild 114, in dem die detektierten thermischen Markierungen 104 eine ganz bestimmte Ordnung aufweisen. Abweichungen von der geradlinigen Fahrt führen zu Änderungen im thermischen Bild 114. Das thermische Bild 114 wird in einer mit dem Sensor 105 gekoppelten Verarbeitungseinheit 106, die einen programmierbaren Prozessor 107 und einen Speicher 108, die über einen Bus 109 miteinander verbunden sind, aufweist, gespeichert. Der Prozessor 107 liest das thermische Bild 114 aus dem Speicher 108 aus und bestimmt aus der Veränderung des thermischen Bildes 114 die Art und Größe der Abweichung von der vorgegebenen Fahrtrichtung 113.

Daraus ermittelt der Prozessor 107 eine Lenkungsgröße, die an eine mit der Verarbeitungseinheit 106 gekoppelten Lenkungseinheit 110 übertragen wird. Die Lenkungseinheit 110 positioniert in Abhängigkeit der übertragenen Lenkungsgröße die Räder 101, 115 des Roboters so, daß die Abweichung von der geradlinigen Fahrt kompensiert wird.

### 2. Orientierung eines autonomen Reinigungsroboters

In Figur 2 ist die Orientierung des Roboters, der als Reinigungsroboter 201 eingesetzt wird, an einer durch den Roboter 201 erzeugten Flüssigkeitsspur 202 dargestellt.

Feuchte Bodenelemente 202 kühlen durch die abgeführte Verdunstungsenergie der Flüssigkeit im Vergleich zur Umgebungstemperatur ab und bilden eine Thermospur 202. Diese wird zur Orientierung des Reinigungsroboters 201 für zwei Lenkungsaufgaben eingesetzt:
- Der Reinigungsroboter 201 verwendet die selbst erzeugte Thermospur 202, wie in Ausführungsbeispiel 1 dargestellt, zur Steuerung der geradlinigen Fahrt 206.
- Für eine effiziente Reinigung einer Fläche 203, die durch aneinandergrenzende, um die Breite des Reinigungsroboters 201 seitlich versetzte und parallel verlaufende Reinigungsbahnen 204a-d, die von dem Reinigungsroboter 201 in abwechselnder Fahrtrichtung 207 durchfahren werden, abgedeckt wird, orientiert der Reinigungsroboter 201 die aktuell von ihm gefahrene Reinigungsbahn 204b an der Thermospur 202, die während der Fahrt der zuvor gefahrenen Reinigungsbahn 204a erzeugt wurde.

Die Anordnung des thermischen Sensor 205, der Aufbau und die Funktionsweise der Verarbeitungseinheit 208 bzw. 106 ist in Ausführungsbeispiel 1 dargestellt.

### 3. Absicherung von einem Gefährdungsbereich durch eine thermische Markierung

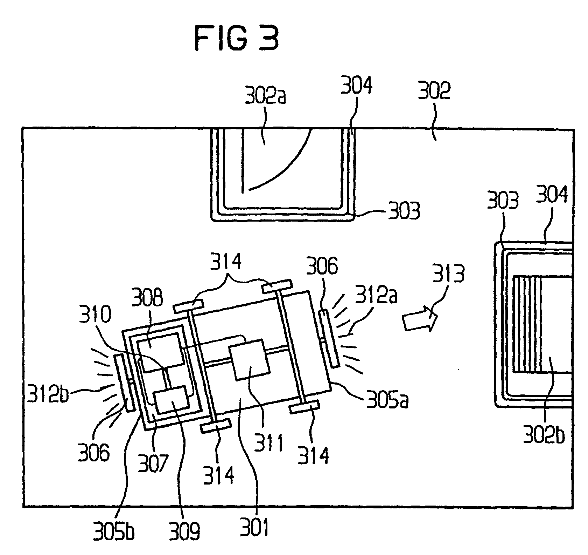

Ein weiteres Ausführungsbeispiel ist in Figur 3 dargestellt und wird im weiteren näher erläutert.

Figur 3 zeigt eine Ausführung der Erfindung, in der der thermische Sensor 306 dazu verwendet wird, um das Eindringen des Roboters 301 in einen durch eine thermische Markierung 303 abgegrenzten räumlichen Bereichs 302a,b zu verhindern. Dies ist notwendig, wenn ein Bereich 302a,b des für den Roboters zugänglichen Raums 302 ein Gefährdungspotential aufweist. Ein solcher Bereich 302a,b ist die Zone im Umgebungsbereich einer sich öffnenden Tür 302a oder eine Treppenstufe 302b.

Dazu ist ein Widerstandsdraht 303 in den Boden eingelassen, der den für den Roboter 301 gefährlichen Bereich 302a,b in einem vorgebbaren Sicherheitsabstand abgrenzt. Der Widerstandsdraht 303 erwärmt die an ihn grenzenden Bodenelemente 304 auf eine vorgegebene Temperatur und erzeugt die thermische Markierung 304.

An der Vorderseite 305a und an der Rückseite 305b des Roboters wird ein thermischer Sensor 306 angebracht, der das thermische Umgebungsbild in 312a Fahrtrichtung 313 und entgegen 312b der Fahrtrichtung 313 des Roboters 301 liefert. Der verwendete Sensor 306 ist so ausgestaltet, wie in [1] beschrieben.

In diesem thermischen Bild 312a,b weist die thermische Markierung 304 aufgrund der vorgegebenen Temperatur eine von einer Verarbeitungseinheit 307 eindeutig erkennbare Ausprägung auf.

Das thermische Bild 312a,b wird in einer mit dem Sensor 306 gekoppelten Verarbeitungseinheit 307, die einen programmierbaren Prozessor 308 und einen Speicher 309, die über einen Bus 310 miteinander verbunden sind, aufweist, gespeichert. Der Prozessor 308 liest das thermische Bild 312a,b aus dem Speicher 309 aus und bestimmt aus der Orientierung der thermischen Markierung 304 im thermischen Bild 312a,b die Position des Roboters 301 zu der thermischen Markierung 304.

In Abhängigkeit der ermittelten Position errechnet der Prozessor 308 eine Lenkungsgröße, die an eine mit der Verarbeitungseinheit 307 gekoppelten Lenkungseinheit 311 übertragen wird. Die Lenkungseinheit 311 positioniert in Abhängigkeit der übertragenen Lenkungsgröße die Räder 314 des Roboters 301 so, daß der Roboter die thermische Markierung 304 nicht überfährt.

### 4. Erkennung eines menschlichen Hindernisses

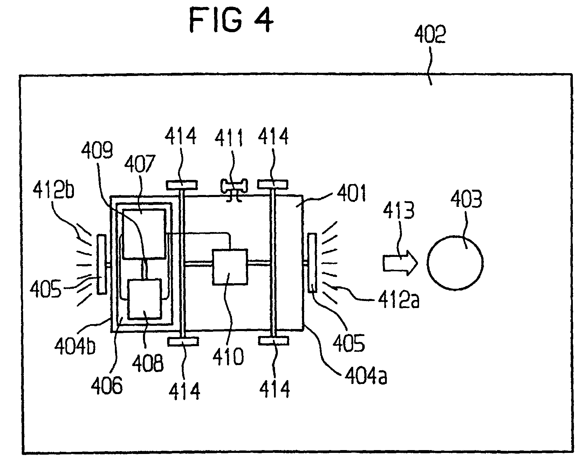

Ein weiteres Ausführungsbeispiel ist in Figur 4 dargestellt und wird im weiteren näher erläutert.

Wird ein mobiler Roboter 401 in einem Raum 402 eingesetzt, der einer Person 403 zugänglich ist, so stellt die sich in diesem Raum befindende Person 403 ein Hindernis für den Roboter 401 dar. Die Person 403 wird aber aufgrund der natürlichen Körperwärme als menschspezifische thermische Markierung erkannt.

An der Vorderseite 404a und an der Rückseite 404b des Roboters 401 wird ein thermischer Sensor 405 angebracht, der das thermische Umgebungsbild in 412a Fahrtrichtung 413 und entgegen 412b der Fahrtrichtung 413 des Roboters 401 liefert. Der verwendete Sensor 405 ist so ausgestaltet, wie in [1] beschrieben.

In diesem thermischen Bild 412a,b weist die menschspezifische thermische Markierung 403 aufgrund der Körperwärme eine von einer Verarbeitungseinheit 406 eindeutig erkennbare Ausprägung auf.

Das thermische Bild 412a,b wird in einer mit dem Sensor 405 gekoppelten Verarbeitungseinheit 406, die einen programmierbaren Prozessor 407 und einen Speicher 408, die über einen Bus 409 miteinander verbunden sind, aufweist, gespeichert. Der Prozessor 407 liest das thermische Bild 412a,b aus dem Speicher 408 aus und bestimmt aus der Orientierung der thermischen Markierung 403 im thermischen Bild 412a,b die Position des Roboters 401 zu der thermischen Markierung 403.

In Abhängigkeit der ermittelten Position errechnet der Prozessor 407 eine Lenkungsgröße, die an eine mit der Verarbeitungseinheit 406 gekoppelten Lenkungseinheit 410 übertragen wird. Die Lenkungseinheit 410 positioniert in Abhängigkeit der übertragenen Lenkungsgröße die Räder 414 des Roboters 401 so, daß der Roboter 401 die thermische Markierung 403 in einem vorgegeben Sicherheitsabstand umfährt.

Im folgenden werden einige Varianten zu dem oben beschriebenen Ausführungsbeispiel erläutert.

Um eine Kollision zwischen dem Roboter 401 und der Person 403 zu verhindern, kann die Lenkungseinheit 410 in Abhängigkeit der ermittelten Position des Roboters 401 die Fahrt durch Abschalten des Roboters 401 stoppen.

Ferner ist es vorgesehen eine Warnvorrichtung 411 am Roboter 401 anzubringen, die in Abhängigkeit der ermittelten Position des Roboters 401 ein audiovisuelles Warnsignal liefert.

Im Rahmen dieses Dokuments wurden folgende Veröffentlichungen zitiert:
[1] R. Bruchhaus, D. Pitzer, R. Primig, M. Schreiter, W. Wersing, N. Neumann, N. Hess, J. Vollheim, R. Köhler, M. Simon,
   An 11x6 Element Pyroelectric Detector Array Utilizing Self-Polarized PZT Thin Film Grown by Sputtering, Integrated Ferroelectrics, Vol. 17, S. 369-376, 1997
[2] T. Cord et. Al., Mobile autonome Roboter zum Transport von Containern, 11. Fachgespräch Autonome mobile Systeme, Karlsruhe, Hrsg. R. Dillmann, U.Rembold, T. Lüth, Springer Verlag, Berlin, Heidelberg, New York, Seite 1-9, 1995
[3] R. Bauer, Integriertes hierarchisches Navigationssystem für autonome mobile Roboter, S. 17-23, S. 35-41, Dissertation Universität Linz, 1997
[4] DE 44 157 36 A1
[5] DE 35 369 74 A1
[6] DE 40 23 952 A1

## Patentansprüche

1. Anordnung zur Ermittlung einer räumlichen Position eines ersten Objekts (103), die einen bildgebenden thermischen Sensor (105) und eine mit dem Sensor (105) gekoppelte Verarbeitungseinheit (106), mit der aus entsprechenden Signalen des Sensors (105) anhand mindestens einer thermischen Markierung (104), die von dem Sensor (105) erfaßt wird, die räumliche Position des ersten Objekts (103) bestimmbar ist, umfaßt.

2. Anordnung nach Anspruch 1, bei der die Verarbeitungseinheit derart eingerichtet ist, daß aus den bildgebenden Signalen des Sensors anhand von mehreren thermischen Markierungen, die von dem Sensor erfaßt werden, die räumliche Position des ersten Objekts bestimmbar ist.

3. Anordnung nach Anspruch 1 oder 2, bei der der bildgebende thermische Sensor ein Sensor mit einem pyroelektrischen Dünnfilm ist.

4. Anordnung nach einem der Ansprüche 1 bis 3, die ein Mittel umfaßt, das derart auf ein zweites Objekt wirkt, daß die Temperatur des zweiten Objekts im Vergleich zur Umgebungstemperatur verschieden ist, und das zweite Objekt als thermische Markierung erkennbar ist.

5. Anordnung nach Anspruch 4, bei der das Mittel so eingerichtet ist, daß das zweite Objekt mit Flüssigkeit benetzt wird, so daß die Temperatur des zweiten Objekts im Vergleich zur Umgebungstemperatur verschieden ist, und das zweite Objekt als thermische Markierung erkennbar ist.

6. Anordnung nach Anspruch 4 oder 5, bei der das Mittel, das auf das zweite Objekt wirkt, das erste Objekt ist.

7. Anordnung nach einem der Ansprüche 1 bis 6, bei der der bildgebende thermische Sensor am ersten Objekt angebracht ist.

8. Anordnung nach einem der Ansprüche 1 bis 7, bei der das erste Objekt ein Roboter ist.

9. Verfahren zur Ermittlung einer räumlichen Position eines ersten Objekts (103) mittels eines bildgebenden thermischen Sensors (105) und einer mit dem Sensor (105) gekoppelten Verarbeitungseinheit (106), das folgende Schritte enthält:
a)der Sensor (105) detektiert ein thermisches Bild der Umgebung und gibt entsprechende Signale an die Verarbeitungseinheit (106) ab,
b)die Verarbeitungseinheit (106) nimmt die Signale auf, wertet das Bild hinsichtlich mindestens einer thermischen Markierung (104) aus und bestimmt abhängig von der Markierung (104) die räumliche Position des ersten Objekts (103).

10. Verfahren nach Anspruch 9, bei dem das Bild hinsichtlich mehrerer thermischer Markierungen ausgewertet wird und abhängig von den thermischen Markierungen die räumliche Position des ersten Objekts bestimmt wird.

11. Verfahren nach Anspruch 9 oder 10, bei dem die Temperatur eines zweiten Objekts verändert wird, so daß das zweite Objekt als thermische Markierung erkannt wird.

12. Verfahren nach Anspruch 11, bei der das zweite Objekt mit Flüssigkeit benetzt wird, so daß die Temperatur des zweiten Objekts im Vergleich zur Umgebungstemperatur verschieden ist, und somit das zweite Objekt als thermische Markierung erkannt wird.

13. Verfahren nach einem der Ansprüche 9 bis 12, bei der die Verarbeitungseinheit aus den Signalen des Sensors die relative Position des ersten Objekts zur thermischen Markierung ermittelt.

14. Verfahren nach einem der Ansprüche 9 bis 12, bei der die Verarbeitungseinheit aus den Signalen des Sensors die absolute Position des ersten Objekts ermittelt.

## Claims

1. Arrangement for determining a spatial position of a first object (103), the arrangement comprising an imaging thermal sensor (105) and a processing unit (106) coupled to the sensor (105), with which the spatial position of the first object (103) can be determined from appropriate signals from the sensor (105) by using at least one thermal marking (104) which is registered by the sensor (105).

2. Arrangement according to Claim 1, in which the processing unit is set up in such a way that the spatial position of the first object can be determined from the imaging signals from the sensor by using a plurality of thermal markings which are registered by the sensor.

3. Arrangement according to Claim 1 or 2, in which the imaging thermal sensor is a sensor having a pyroelectric thin film.

4. Arrangement according to one of Claims 1 to 3, which comprises a means which acts on a second object in such a way that the temperature of the second object is different from the ambient temperature, and the second object can be detected as a thermal marking.

5. Arrangement according to Claim 4, in which the means is set up in such a way that the second object is wetted with liquid, so that the temperature of the second object is different from the ambient temperature, and the second object can be detected as a thermal marking.

6. Arrangement according to Claim 4 or 5, in which the means which acts on the second object is the first object.

7. Arrangement according to one of Claims 1 to 6, in which the imaging thermal sensor is fitted to the first object.

8. Arrangement according to one of Claims 1 to 7, in which the first object is a robot.

9. Method for determining a spatial position of a first object (103) by means of an imaging thermal sensor (105) and a processing unit (106) coupled to the sensor (105), which includes the following steps:
a) the sensor (105) detects a thermal image of the environment and outputs appropriate signals to the processing unit (106),
b) the processing unit (106) picks up the signals, evaluates the image with regard to at least one thermal marking (104) and determines the spatial position of the first object (103) on the basis of the marking (104).

10. Method according to Claim 9, in which the image is evaluated with regard to a plurality of thermal markings, and the spatial position of the first object is determined on the basis of the thermal markings.

11. Method according to Claim 9 or 10, in which the temperature of a second object is changed, so that the second object is detected as a thermal marking.

12. Method according to Claim 11, in which the second object is wetted with liquid, so that the temperature of the second object is different from the ambient temperature, and therefore the second object is detected as a thermal marking.

13. Method according to one of Claims 9 to 12, in which the processing unit determines the relative position of the first object in relation to the thermal marking from the signals from the sensor.

14. Method according to one of Claims 9 to 12, in which the processing unit determines the absolute position of the first object from the signals from the sensor.

## Revendications

1. Dispositif destiné à la détermination de la position spatiale d'un premier objet (103) et comportant un détecteur thermique (105), qui délivre une image, et une unité de traitement (106), couplée au détecteur (105), avec laquelle on peut déterminer, à partir de signaux correspondants du détecteur (105), à l'aide d'au moins un repérage thermique (104) qui est saisi par le détecteur (105), la position spatiale du premier objet (103).

2. Dispositif selon la revendication 1 dans lequel l'unité de traitement est réglée de telle sorte que la position spatiale du premier objet peut être déterminée, à partir des signaux du détecteur délivrant une image, à l'aide de plusieurs repérages thermiques qui sont captés par le détecteur.

3. Dispositif selon la revendication 1 ou 2 dans lequel le détecteur thermique qui délivre une image est un détecteur à membrane pyroélectrique.

4. Dispositif selon l'une des revendications 1 à 3 qui comprend un moyen agissant sur un deuxième objet de telle sorte que la température du deuxième objet est différente de la température ambiante et que le deuxième objet peut être reconnu comme repérage thermique.

5. Dispositif selon la revendication 4 dans lequel le moyen est aménagé de telle sorte que le deuxième objet est humidifié par un liquide si bien que la température du deuxième objet est différente de la température ambiante et que le deuxième objet peut être reconnu comme repérage thermique.

6. Dispositif selon la revendication 4 ou 5 dans lequel le moyen, qui agit sur le deuxième objet, est le premier objet.

7. Dispositif selon l'une des revendications 1 à 6 dans lequel le détecteur thermique, qui délivre une image, est monté sur le premier objet.

8. Dispositif selon l'une des revendications 1 à 7 dans lequel le premier objet est un robot.

9. Procédé destiné à déterminer la position spatiale d'un premier objet (103) au moyen d'un détecteur thermique (105), qui délivre une image, et d'une unité de traitement (106) couplée au détecteur (105) et qui comprend les étapes suivantes:
a) le détecteur (105) détecte une image thermique de l'environnement et délivre des signaux correspondants à l'unité de traitement (106),
b) l'unité de traitement (106) reçoit les signaux, analyse l'image en ce qui concerne au moins un repérage thermique (104) et détermine, en fonction du repérage (104), la position spatiale du premier objet (103).

10. Procédé selon la revendication 9 dans lequel l'image est analysée en ce qui concerne plusieurs repérages thermiques et dans lequel, en fonction des repérages thermiques, on détermine la position spatiale du premier objet.

11. Procédé selon la revendication 9 ou 10 dans lequel la température du deuxième objet est modifiée de telle sorte que le deuxième objet est reconnu comme repérage thermique.

12. Procédé selon la revendication 11 dans lequel le deuxième objet est humidifié avec un liquide si bien que la température du deuxième objet est différente de la température ambiante et, ainsi, le deuxième objet est reconnu comme repérage thermique.

13. Procédé selon l'une des revendications 9 à 12 dans lequel l'unité de traitement détermine, à partir des signaux du détecteur, la position relative du premier objet par rapport au repérage thermique.

14. Procédé selon l'une des revendications 9 à 12 dans lequel l'unité de traitement détermine, à partir des signaux du détecteur, la position absolue du premier objet.
